Europäisches Patentamt

European Patent Office

Office européen des brevets

(11) Publication number: **0 050 438**
**B1**

(12) **EUROPEAN PATENT SPECIFICATION**

(45) Date of publication of patent specification: **20.01.88**

(21) Application number: **81304601.8**

(22) Date of filing: **05.10.81**

(51) Int. Cl.⁴: **C 08 K 5/31,** C 08 L 23/10,
A 01 N 47/44

(54) Biocidal material.

(30) Priority: **06.10.80 GB 8032154**

(43) Date of publication of application:
**28.04.82 Bulletin 82/17**

(45) Publication of the grant of the patent:
**20.01.88 Bulletin 88/03**

(84) Designated Contracting States:
**AT BE CH DE FR IT LI LU NL SE**

(58) References cited:
**FR-A-1 545 593**
**GB-A- 990 277**

**CHEMICAL ABSTRACTS, vol. 80, no. 14, 8th
April 1974, no. 71527q, page 32, Columbus
Ohio (USA);**

(73) Proprietor: **McNally, Ronald
29 Lewis Street Bedlinog
Treharris Mid Glamorganshire Wales (GB)**

(72) Inventor: **Winter, Raymond William
7, Somerset View
Sully South Glamorgan Wales (GB)**

(74) Representative: **Johnson, Terence Leslie et al
Edward Evans & Co. Chancery House 53-64
Chancery Lane
London WC2A 1SD (GB)**

Courier Press, Leamington Spa, England.

## Description

The invention relates to synthetic high polymeric materials such as plastics, fibres and fabrics having a bacteriocidal, antiseptic or disinfectant effect.

Many articles are today made of plastic material as it is relatively inexpensive, but is light in weight, relatively easily manufactured by a variety of processes to numerous shapes, and can be relatively easily coloured to a desired colour by addition of suitable additives. Because of its relatively ubiquitous nature, plastics materials when made are often contacted by a number of different people, with the result that potentially harmful bacteria on the plastics can be communicated from one to another. This is a disadvantage of plastics and rubber materials and textile and similarly related materials.

FR—A—1 545 593 discloses a composite material consisting of a polymer and polymeric chlorhexidine, being moulded from a blend of the particulate form to the desired shape.

The disadvantage of this blend is that the chlorhexidine is impure which breaks down when the mixture is melted, to form the blend, and moulded, which again gives rise to heating. The bacteriocidal properties of the chlorhexidine are thus lost.

US—A—2 684 924 discloses the synthesis of chlorhexidine, and also discloses use thereof as a steriliser of instruments or body tissues as a one-off effect, with no permanency.

Neither FR—A—1 545 593 or US—A—2 684 924, discloses eradication of harmful bacteria on a continuing basis after a moulding operation.

It is an object of the invention to seek to mitigate this disadvantage of prior plastics, rubbers and related materials.

According to one aspect of the invention there is provided a composite material which is capable of destroying bacteria which comes into contact therewith in order to protect the environment in which the composite material is used from potentially harmful bacteria, comprising a blend of particulate polymer and particulate chlorhexidine biocidal agent which is innocuous to humans and to the polymer but which can destroy bacteria, the blend being moulded, as a means of incorporation of the biocidal agent in the polymer, to a desired shape, characterised by the biocidal agent being particulate monomeric chlorhexidine intimately distributed throughout the moulded composite material.

Chlorhexidine, (1,6-di (-4-chlorophenyl diguanido) hexane) provides a particularly effective agent which is not harmful to the touch, and which is easily provided in particulate form.

The polymer may be polypropylene. This is a relatively easily moulded material.

There may be 95% by weight polypropylene and 5% by weight chlorhexidine.

The invention is hereinafter described in the following Examples.

## Example I

5% by weight of particulate antiseptic agent in the form of Chlorhexidine crystals were mixed with 95% by weight polypropylene particles. The crystals and particles were mixed and then moulded by an injection process to provide a coherent plastics material.

A disc was cut from this material and was coated with flora from the human gut. The disc was incubated and then the flora counted. There were none on the disc. The Chlorhexidine had effectively killed the bacteria on the surface of the plastics, which maintained its usual properties of lightness and ability to be formed, while the Chlorhexidine maintained its antiseptic characteristics.

## Example II

5% blood agar plates were innoculated separately with S. aureus, E. coli, Ps. aeruginosa and polypropylene discs containing 5% by weight of Chlorhexidine were placed on the surfaces. The plates were incubated at 37°C for 24 hours and extensive zones of inhibition were observed around the discs. Subcultures of agar around and beneath the discs were incubated on 5% blood agar plates for 24 hours at 37°C and no growth was observed. The Chlorhexidine had effectively killed the bacteria.

To simulate the long term bacteriocidal activity of Chlorhexidine, samples of polypropylene containing 5% biocide were held for long periods at 50° and 100°C and then submitted to the above bacteria protocol. No significant reduction in activity was observed.

It will be understood that any desired proportions of polymer to biocide (antiseptic/disinfectant agent) can be used. Also, any desired polymer which can be formed to a desired shape may be used.

The polymer and agent provide an integral antiseptic/disinfectant material, which can be moulded to provide lavatory seats and/or covers, flushing mechanisms including handles, door knobs, work-surfaces, trays, mattress and pillow covers, mats, liquid and air filters, rigid or elastic artifacts and the like. It will be understood that the invention extends to such articles.

## Claims

1. A composite material which is capable of destroying bacteria which comes into contact therewith in order to protect the environment in which the composite material is used from potentially harmful bacteria, comprising a blend of particulate polymer and particulate chlorhexidine biocidal agent which is innocuous to humans and to the polymer but which can destroy bacteria, the blend being moulded, as a means of incorporation of the biocidal agent in the polymer, to a desired shape, characterised by the biocidal agent being particulate monomeric chlorhexidine intimately distributed throughout the moulded composite material.

2. A composite material according to Claim 1, characterised in that the polymer comprises polypropylene.

3. A composite material according to Claim 2, characterised by the polypropylene and the chlorhexidine being combined in the proportions of 95%—5% by weight prior to moulding.

## Patentansprüche

1. Verbundwerkstoff, der in der Lage ist, Bakterien zu zerstören, die damit in Kontakt kommen, um so die Umgebung, in der der Verbundwerkstoff verwendet wird, vor potentiell schädlichen Bakterien zu schützen, wobei er eine Mischung aus korpuskularem Polymer und korpuskularem Chlorhexidin als bioziden Wirkstoff umfasst, der weder dem Menschen noch dem Polymer schadet, jedoch Bakterien zerstören kann, wobei die Mischung als Beimischungsmittel im bioziden Wirkstoff im Polymer in eine gewünschte Form gebracht wird, dadurch gekennzeichnet, dass der biozide Wirkstoff korpuskulares, monomeres Chlorhexidin ist, das innig im geformten Verbundwerkstoff verteilt wird.

2. Verbundwerkstoff gemäss Anspruch 1, dadurch gekennzeichnet, dass das Polymer aus Polypropylen besteht.

3. Verbundwerkstoff nach Anspruch 2, dadurch gekennzeichnet, dass das Polypropylen und das Chlorhexidin in einem Verhältnis von 95 zu 5 Gw.% zueinander vor dem Formen kombiniert werden.

## Revendications

1. Matériau composite étant capable de détruire des bactéries entrant en contact avec lui afin de protéger l'environnement, dans lequel le matériau composite est utilisé, contre des bactéries potentiellement nuisibles, comprenant un mélange de polymère particulaire et de chlorhexidine particulaire en forme d'agent biocide qui n'est pas nuisible aux êtres humains ni au polymère mais qui est à même de détruire des bactéries, le mélange étant moulé dans une forme désirée en tant que moyen d'incorporation de l'agent biocide dans le polymère, caractérisé en ce que l'agent biocide consiste en chlorhexidine particulaire et monomérique, distribué à travers le matériau composite de façon intime.

2. Matériau composite suivant la revendication 1, caractérisé en ce que le polymère consiste en polypropylène.

3. Matériau composite suivant la revendication 2, caractérisé en ce que le polypropylène et le chlorhexidine sont combinés dans une proportion de 95 à 5 % en poids avant le moulage.